# EUROPEAN PATENT SPECIFICATION

(11) **EP 3 427 015 B1**
(45) Date of publication and mention of the grant of the patent: **21.04.2021**
(21) Application number: 16816330.1
(22) Date of filing: 21.11.2016
(51) Int. Cl.: G01F 23/00, B64D 37/14, B67D 7/30, B64F 1/28, B64D 37/16, B67D 7/04, B67D 7/08, B67D 7/32, G01F 22/00

(54) **FUELLING METHOD**
TANKVERFAHREN
PROCÉDÉ D'ALIMENTATION EN CARBURANT

(30) Priority: 10.03.2016 GB 201604094
(43) Date of publication of application: 16.01.2019
(73) Proprietor: I6 Group Limited, Farnborough, Hampshire GU14 6XA (GB)
(72) Inventor: MATTOS, Alexander, Farnborough Hampshire GU14 6XA (GB); UHRMACHER, Steven, Farnborough Hampshire GU14 6XA (GB); HOLMES, Robert, Farnborough Hampshire GU14 6XA (GB)
(74) Representative: Bailey, Richard Alan
(86) International application number: PCT/GB2016/053618
(87) International publication number: WO 2017/153704

(56) References cited:
- EP-A1- 0 787 096
- US-A- 4 819 183
- US-A1- 2005 267 673
- US-A1- 2008 065 449

## Description

This invention relates to a method for use in fuelling or refuelling. By way of example, the method may be employed in the fuelling or refuelling of aircraft. However, it may be employed in other applications, such as in the fuelling or refuelling of trains, lorries, ships or other vehicles, or indeed to the supply of fuel to other tanks or containers.

A typical method used in the refuelling of aircraft involves connecting a fuel truck or fuel hydrant or the like to an aircraft and dispensing a quantity of fuel to the aircraft. After a predetermined period of time, sufficient to allow the fuel to homogenise and settle in the aircraft's fuel tanks (referred to hereinafter as a settling period), a reading is taken using the aircraft's fuel gauges to determine whether or not the correct or desired quantity of fuel has been dispensed to the aircraft. If it is determined that insufficient fuel has been dispensed, then the fuel truck or the like is reconnected (if it has previously been disconnected) and additional fuel is dispensed to the aircraft. After the dispensing of the additional fuel is complete, and after again allowing a predetermined settling period time for the fuel to settle in the aircraft fuel tanks, the aircraft's fuel gauges are again used to ascertain whether the desired fuel quantity is present. After the dispensing of fuel has been completed in this fashion, the fuel truck or the like is disconnected from the aircraft.

To speed up the refuelling process, often no settling period is allowed after the second (and subsequent) delivery of fuel. Indeed, commonly, refuelling operators estimate how much of a top-up of fuel will be required, erring on the side of caution, and they top-up the aircraft accordingly. Whilst this speeds up the refuelling process, it typically results in significant over-fuelling of the aircraft.

It is very important that the settling period is allowed to elapse before fuel gauge readings are taken as making readings before this runs a significant risk of the readings being inaccurate or inconsistent.

Only once the pilot or other officer of the aircraft is satisfied that the desired quantity of fuel has been dispensed to the aircraft (and a number of other checks been satisfactorily undertaken) will the aircraft be signed off as ready for departure. Before the pilot or other officer is satisfied that the desired quantity of fuel is present, the step of dispensing additional fuel may need to be repeated several times, each occasion requiring the settling period to elapse before the fuel gauge readings can be taken.

It will be appreciated that the refuelling procedure outlined hereinbefore is time consuming, especially as the predetermined settling period that has to be allowed before each fuel reading is taken using the aircraft's gauges can be significant, for example of the order of 10 or more minutes, depending upon the aircraft type and other factors.

As, often, changes to the required quantity of fuel are made fairly shortly before departure, arising from, for example, modifications in the loading of the aircraft, route changes, and the like, it will be appreciated that the method steps outlined hereinbefore may have to be repeated several times before the pilot or other officer of the aircraft is satisfied that sufficient fuel has been dispensed to the aircraft. By way of example, the required quantity of fuel may only be finalised 15-30 minutes before departure and, although some fuel may have already been dispensed to the aircraft before this, insufficient time is available to dispense additional fuel to the aircraft, allow the fuel to settle and receive sign off from the pilot or other officer that sufficient fuel has been dispensed. As a result, departure is regularly delayed as a result of fuelling delays.

In order to maximise operating efficiency, many airlines require the turnaround time during which aircraft are unloaded, made ready for a subsequent flight, and reloaded, to be very short, of the order of 30 minutes. Clearly, the time available for completing the refuelling process outlined hereinbefore, and other operations that have to be undertaken on the aircraft, is very limited, and it is not uncommon for the refuelling process to overrun, resulting in departure delays.

As a result of the shortage of time, it is known omit the step of allowing the fuel to homogenise and settle. However, if the aircraft fuel gauges are read before the fuel is allowed to homogenise and settle, the fuel readings will be incorrect, the gauge readings suggesting that the fuel tanks contain less fuel than is actually the case. If the step of omitting the settling time is omitted then, for the aircraft fuel gauge readings to indicate that the aircraft is carrying the desired fuel level, the aircraft will be over-fuelled. Over-fuelling results in a reduction in the operating efficiency of the aircraft, as the aircraft will be heavier than necessary. Clearly this is undesirable. Furthermore, it results in the airline or aircraft operator having more funds tied up in fuel than necessary which, again, is not desirable.

Whilst the description hereinbefore relates to the fuelling or refuelling of aircraft, it will be appreciated that similar issues, or at least some of the issues, may apply in the fuelling of other vehicles or in other applications.

US2013/0075532 describes an arrangement of the type outlined hereinbefore in which an initial quantity of fuel is delivered to an aircraft, and that subsequently, prior to push back, a top up quantity is delivered. It is assumed that, in the US2013/0075532 arrangement, both the initial quantity of fuel and the top up quantity are measured using the aircraft fuel gauges. US2005/267673, US2008/065449, EP0787096 and US4819183 all describe aircraft refuelling methods and systems, wherein the total amount of fuel dispensed to the aircraft, measured by a fuel volume meter, and a final reading of the aircraft fuel gauges are notified to the aircraft personnel.

It is an object of the invention to provide a fuelling method in which at least some of the disadvantages associated with the methods outlined hereinbefore are overcome or are of reduced effect.

According to the present invention there is provided a fuelling method as defined by appended Claim 1.

The step of calculating preferably takes into account the density of the fuel being dispensed. By way of example, the dispensing apparatus may include a fuel density meter. Alternatively, a fuel density reading derived, for example, at the time of filling a fuel tanker, at the time at which the fuel is transported from a refinery or storage depot, or at another convenient time, may be used in the calculation.

Where the method is used in the refuelling of an aircraft, after dispensing of the differential volume, the pilot or other officer is advised of the fuel gauge readings taken after dispensing of the initial quantity of fuel and after waiting for the settling period to elapse, conveniently expressed in terms of the weight of fuel present, and the differential volume of fuel that has been dispensed, conveniently expressed in terms of the weight of the differential volume of fuel that has been dispensed, in order to satisfy the pilot or other officer that the fuel tank of the aircraft contains the desired quantity of fuel. Where the aircraft contains a plurality of fuel tanks, then the procedure may involve, after elapse of the settling period, obtaining fuel gauge readings for each tank, and calculating and dispensing respective differential volumes of fuel to each tank and notifying the pilot of the fuel quantities present in each tank so that he can be satisfied that each tank contains a desired quantity of fuel, and that the overall level of fuel dispensed is sufficient.

The step of calculating a differential volume of fuel preferably takes into account changes in the quantity of fuel required to be dispensed to the aircraft, taking into account changes in the loading thereof, etc. It may further include an uplift to compensate for potential metering inaccuracies.

It will be appreciated that as the method of the invention avoids the need to wait for the settling period to elapse after dispensing of the differential volume, instead relying upon the fuel volume meter of the dispensing apparatus to provide an indication that the differential volume has been dispensed, the fuelling or refuelling procedure can be completed more quickly, and so delays in aircraft departures may be reduced. The quantity of fuel dispensed may further be more accurately controlled. The invention allows the only point at which waiting for the settling period to pass to occur well before the scheduled departure time of the aircraft. Any subsequent top-up of fuel is accurately measured using the fuel volume meter. As, typically, the top-up will be relatively small, the time taken to perform this step of the method is usually quite short. The invention thus aids in allowing the correct fuel level to be supplied to the aircraft whilst avoiding causing delayed aircraft departure.

The invention will further be described, by way of example, with reference to the accompanying drawings, in which:

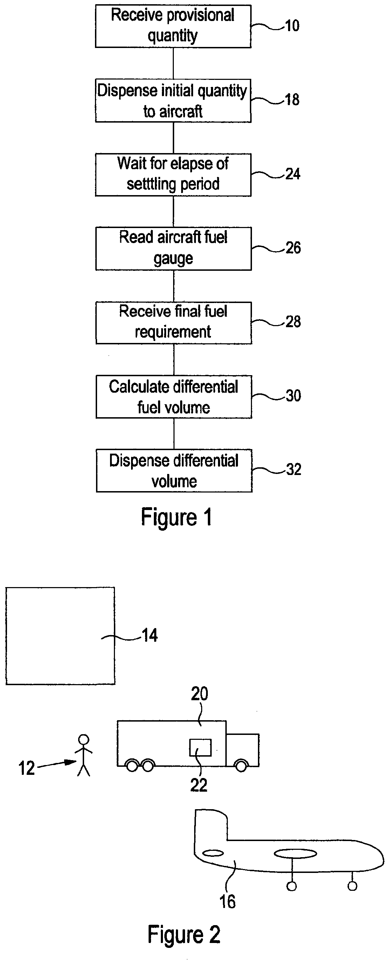

Figure 1, which is a diagram illustrating steps in a method in accordance with an embodiment of the invention; and
Figure 2 is a diagram illustrating use of the invention.

Referring to the accompanying drawings, steps in a refuelling method for use in the refuelling of an aircraft are illustrated.

At step 10, a refuelling operator 12 receives instructions from a control station 14 to attend an aircraft 16 and to dispense a provisional quantity of fuel thereto. After acknowledging receipt of the instructions, the operator 12 attends the aircraft 16 and, at step 18, connects hoses or the like to the aircraft 16 so as to permit fuel to be dispensed from a fuel tanker 20 or other fuel store such a fuel hydrant or the like to a fuel tank of the aircraft 16. The operator 12 controls a dispensing apparatus 22 associated with the fuel tanker 20 to commence the dispensing of an initial quantity of fuel to the aircraft 16. The initial quantity of fuel will be less than the aforementioned provisional quantity.

Conveniently, the dispensing apparatus 22 includes a control operable to allow the operator 12 to input an amount of fuel to dispense, and the apparatus 22 then operates to dispense that quantity of fuel to the aircraft 16, stopping the dispensing of fuel when it is determined that the input initial quantity of fuel has been delivered. It preferably further includes backstop controls to prevent overfilling.

Once the initial quantity of fuel has been dispensed, as indicated at step 24, the operator 12 waits for a predetermined settling period for the fuel dispensed to the aircraft 16 to homogenise and settle in the aircraft's fuel tank. The duration of the settling period may be of the order of, say, 10 minutes. The settling period may be the same, irrespective of the type of aircraft to which fuel is being dispensed, thereby simplifying the fuelling procedure for the operator 12, standardising the procedure for all aircraft. Alternatively, different durations of settling period may be employed with different types of aircraft 16 to take into account characteristics specific to the aircraft that can impact upon how long it takes for the fuel to settle and homogenise. Regardless, the settling period is chosen to be sufficiently long that, after the settling period has elapsed, the fuel gauge or gauges of the aircraft 16 provide an accurate indication of the quantity of fuel present within the aircraft's fuel tank.

Aircraft fuel gauges typically work by computing from the output of a fuel height or depth sensor, information regarding the shape and characteristics of the fuel tank and information regarding the characteristics of the fuel, a value for the weight of fuel present in the tanks. These calculations rely upon a number of assumptions being applicable. By way of example, one of the fuel characteristics used in the calculation relates to the density of the fuel. A single density measurement is typically made and it is assumed that this measurement applies to all of the fuel present. However, often this is not the case. Accordingly, it is common for the calculated weight of fuel output by the flight deck fuel gauge readings to provide an inaccurate indication of the weight of fuel actually present.

In step 26, a reading of the quantity of fuel present in the aircraft fuel tank is taken using the aircrafts fuel gauges, and in step 28 the operator receives final fuel quantity information setting out how much fuel needs to be present in the aircraft 16 before it can be signed off as ready for departure. The final fuel quantity information may be supplied via the control station 14 and/or after discussion with the pilot or other officer responsible for the aircraft. At step 30, the operator calculates, using the final fuel quantity information and the readings from the aircraft fuel gauge, a differential volume of fuel that must be dispensed to the aircraft 16 in order to result in the aircraft 16 carrying the desired final fuel quantity.

As mentioned above, aircraft fuel gauge readings often provide an inaccurate indication of the quantity of fuel actually present. In order to allow for potential inaccuracies, primarily within the aircraft fuel gauges as mentioned before but also potentially within the operation of the dispensing apparatus 22, the calculation of the differential volume may incorporate an uplift to ensure that the final quantity of fuel present on the aircraft (composed of the initial quantity of fuel measured using the aircraft fuel gauges, and the differential quantity including any such uplift) is within acceptable tolerances.

The calculation of the differential volume preferably takes into account variations in fuel density. In this regard, the dispensing apparatus 22 conveniently includes a fuel density meter, the output of which is used in the calculation of the differential fuel volume. Alternatively, density measurements taken at other points may be used. By way of example, a fuel density measurement may be taken at the point at which the fuel tanker 20 is filled, the measurement being used in all fuel volume calculations until the tanker 20 is next refilled. It will be appreciated, however, that this represents just one of a wide range of possible points at which the fuel density reading may be made. Preferably, the calculation of the differential volume of fuel is undertaken by a handheld computer or the like using information input by the operator 12, or supplied thereto electronically.

Once the differential volume has been calculated, the dispensing apparatus 22 is set (at step 32) to dispense that volume of fuel to the aircraft 16, preferably stopping automatically once the differential volume has been dispensed.

It will be appreciated that upon completion of the dispensing of the differential volume of fuel, the aircraft will be carrying the desired final fuel quantity. The pilot or other officer responsible for the aircraft 16 can be provided with an updated indication of the quantity of fuel on board, comprising the initial quantity and the differential volume, for sign-off that the desired final quantity of fuel has been dispensed to the aircraft. As set out hereinbefore, the final quantity of fuel on board is derived from a combination of the fuel gauge readings taken after dispensing of the initial quantity (and after elapse of the settling period) in combination with information provided by the operator 12 of the differential quantity of fuel subsequently supplied. Whilst the dispensing apparatus 22 is configured to control the volume of fuel dispensed to the aircraft 16, the operator 12 instructing the apparatus 22 to dispense the calculated differential volume, and the apparatus 22 provides an indication of the volume of fuel dispensed in, for example, cubic meters or in another suitable volume measurement unit, the operator 12 is able to provide the pilot or other officer responsible for the aircraft with the corresponding, calculated weight of the differential volume dispensed for combination with the fuel weight readings output by the aircraft fuel gauges so that the pilot or officer responsible for the aircraft is able to satisfy himself that the correct, desired fuel quantity is present.

Once the pilot or other officer responsible for the aircraft 16 is satisfied that the desired final fuel quantity is present, and so signs off that fuelling is complete, the operator 12 can disconnect the fuel tanker 20 from the aircraft 16 ready for aircraft departure.

It will be appreciated that the method of the invention is advantageous in that the refuelling process can be shortened through avoiding the need to repeatedly wait for the settling period to elapse before taking each fuel reading, instead only including this step after dispensing of the initial quantity. Not only is the refuelling process shortened in length, and so the risk of departure delays is reduced, but also fuelling accuracy can be enhanced through avoiding situations where the step of waiting for the settling period to elapse is omitted in order to make time savings and through permitting the use of metering equipment of greater accuracy. Enhancing fuelling accuracy allows operating efficiencies to be made.

Where used on aircraft having more than one fuel tank, it will be appreciated that elements of the method will be repeated in relation to each tank to ensure that the fuel level of each tank, and of the aircraft overall, is sufficient.

Whilst the description hereinbefore relates to the refuelling of aircraft, it will be appreciated that a similar methodology may be used in the fuelling of other forms of vehicle and in other applications, allowing time savings to be made and efficiencies arrived at through achieving better fuelling accuracy to be made.

The description hereinbefore is of one embodiment of the invention. It will be appreciated that a wide range of modifications and alterations may be made thereto without departing from the scope of the invention as defined by the appended claims.

## Claims

1. A fuelling method comprising the steps of:
instructing the dispensing of a provisional quantity of fuel to a fuel tank of an apparatus (16);
dispensing (18) an initial quantity of fuel to the fuel tank of the apparatus (16), the initial quantity of fuel being less than the provisional quantity of fuel;
waiting (24) for a predetermined settling period for the fuel dispensed to the fuel tank to homogenise and settle;
after the predetermined settling period has elapsed, taking a fuel quantity reading (26) using a fuel gauge associated with the fuel tank;
receiving (28) a desired final fuel quantity; calculating (30) a differential volume of fuel, comprising a difference between the fuel quantity reading and the desired final fuel quantity;
dispensing (32) to the fuel tank a volume of fuel substantially equivalent to the differential volume using a dispensing apparatus (22) including a fuel volume meter; and
notifying an officer associated with the apparatus (16) of the total fuel quantity contained within the fuel tank, derived from a combination of the fuel quantity reading read using the fuel gauge after dispensing the initial quantity of fuel and waiting for the settling period to elapse, and the differential volume measured using the fuel volume meter,
such that waiting for the settling period to elapse after dispensing of the differential volume is avoided.

2. A method according to Claim 1, wherein the step of calculating (30) takes into account the density of the fuel being dispensed.

3. A method according to Claim 2, wherein the dispensing apparatus includes a fuel density meter.

4. A method according to any of the preceding claims, and used in the fuelling of an aircraft, the apparatus (16) comprising the aircraft.

5. A method according to Claim 4, wherein, after dispensing (32) of the differential volume, the officer is advised of the fuel gauge readings taken after dispensing of the initial quantity of fuel and after waiting for the settling period to elapse, and the differential volume of fuel that has been dispensed.

6. A method according to Claim 5, wherein the quantities of fuel are expressed in weight of fuel.

7. A method according to any of Claims 4 to 6, wherein the step of calculating (30) a differential volume of fuel takes into account changes in the quantity of fuel required to be dispensed to the aircraft.

8. A method according to any of the preceding claims, wherein the step of calculating includes applying an uplift to compensate for potential metering inaccuracies.

## Patentansprüche

1. Tankverfahren, umfassend die folgenden Schritte:
Anweisen der Abgabe einer vorläufigen Kraftstoffmenge in einen Kraftstofftank einer Einrichtung (16);
Abgeben (18) einer anfänglichen Kraftstoffmenge in den Kraftstofftank der Einrichtung (16), wobei die anfängliche Kraftstoffmenge geringer als die vorläufige Kraftstoffmenge ist;
Abwarten (24) einer vorbestimmten Setzzeitspanne, damit sich der in den Kraftstofftank abgegebene Kraftstoff homogenisieren und setzen kann;
nach Ablauf der vorbestimmten Setzzeitspanne Messen der Kraftstoffmenge (26) mittels eines zum Kraftstofftank gehörenden Kraftstoffmessers;
Empfangen (28) einer gewünschten endgültigen Kraftstoffmenge;
Berechnen (30) eines Differenzvolumens an Kraftstoff, die eine Differenz zwischen der gemessenen Kraftstoffmenge und der gewünschten endgültigen Kraftstoffmenge umfasst;
Abgeben (32) eines im Wesentlichen dem Differenzvolumen entsprechenden Kraftstoffvolumens in den Kraftstofftank unter Verwendung einer Abgabeeinrichtung (22) mit einem Kraftstoffvolumenmesser; und
Benachrichtigen eines mit der Einrichtung (16) verknüpften Bediensteten über die in dem Kraftstofftank enthaltene gesamte Kraftstoffmenge, die aus einer Kombination der unter Verwendung des Kraftstoffmessers nach Abgeben der anfänglichen Kraftstoffmenge und dem Abwarten des Ablaufs der Setzzeitspanne gemessenen Kraftstoffmenge und des unter Verwendung des Kraftstoffvolumenmessers gemessenen Differenzvolumens abgeleitet wird, sodass das Abwarten des Ablaufs der Setzzeitspanne nach dem Abgeben des Differenzvolumens vermieden wird.

2. Verfahren gemäß Anspruch 1, wobei der Schritt des Berechnens (30) die Dichte des abgegebenen Kraftstoffs berücksichtigt.

3. Verfahren gemäß Anspruch 2, wobei die Abgabeeinrichtung einen Kraftstoffdichtemesser enthält.

4. Verfahren gemäß einem der vorhergehenden Ansprüche, das bei der Betankung eines Luftfahrzeugs verwendet wird, wobei die Einrichtung (16) das Luftfahrzeug umfasst.

5. Verfahren gemäß Anspruch 4, wobei nach dem Abgeben (32) des Differenzvolumens dem Bediensteten die Messwerte der Kraftstoffanzeige, die nach dem Abgeben der anfänglichen Kraftstoffmenge und nach dem Abwarten der Setzzeitspanne ermittelt wurden, sowie das abgegebene Differenzvolumen mitgeteilt werden.

6. Verfahren gemäß Anspruch 5, wobei die Kraftstoffmengen als Gewicht an Kraftstoff ausgedrückt werden.

7. Verfahren gemäß einem der Ansprüche 4 bis 6, wobei der Schritt des Berechnens (30) eines Differenzvolumens an Kraftstoff Änderungen in der Kraftstoffmenge berücksichtigt, die an das Luftfahrzeug abgegeben werden muss.

8. Verfahren gemäß einem der vorhergehenden Ansprüche, wobei der Schritt des Berechnens das Anwenden eines Aufschlags enthält, um potentielle Messungenauigkeiten zu kompensieren.

## Revendications

1. Procédé d'avitaillement en carburant, comprenant les étapes suivantes :
instruction donnée de distribuer une quantité provisoire de carburant à un réservoir de carburant d'un appareil (16) ;
distribution (18) d'une quantité initiale de carburant au réservoir de carburant de l'appareil (16), la quantité initiale de carburant étant inférieure à la quantité provisoire de carburant ;
attente (24) pendant une période de stabilisation prédéterminée que le carburant distribué au réservoir de carburant s'homogénéise et se stabilise ;
suite à l'écoulement de la période de stabilisation prédéterminée, prise d'un relevé de quantité de carburant (26) au moyen d'une jauge de carburant associée au réservoir de carburant ;
réception (28) d'une quantité finale souhaitée de carburant ;
calcul (30) d'un volume différentiel de carburant, comprenant une différence entre le relevé de quantité de carburant et la quantité finale souhaitée de carburant ;
distribution (32) au réservoir de carburant d'un volume de carburant sensiblement équivalent au volume différentiel au moyen d'un appareil distributeur (22) comportant un compteur volumétrique de carburant ; et
notification à un agent associé à l'appareil (16) de la quantité totale de carburant contenue dans le réservoir de carburant, déduite d'une combinaison du relevé de quantité de carburant relevé au moyen de la jauge de carburant, suite à la distribution de la quantité initiale de carburant et à l'attente de l'écoulement de la période de stabilisation, et du volume différentiel mesuré au moyen du compteur volumétrique de carburant, de façon à éviter l'attente de l'écoulement de la période de stabilisation suite à la distribution du volume différentiel.

2. Procédé selon la revendication 1, dans lequel l'étape de calcul (30) tient compte de la densité du carburant en cours de distribution.

3. Procédé selon la revendication 2, dans lequel l'appareil de distribution comporte un densimètre de carburant.

4. Procédé selon l'une quelconque des revendications précédentes, et utilisé dans l'avitaillement d'un aéronef, l'appareil (16) comprenant l'aéronef.

5. Procédé selon la revendication 4, dans lequel, suite à la distribution (32) du volume différentiel, l'agent est informé des relevés de la jauge de carburant pris suite à la distribution de la quantité initiale de carburant et suite à l'attente de l'écoulement de la période de stabilisation, et du volume différentiel de carburant qui a été distribué.

6. Procédé selon la revendication 5, dans lequel les quantités de carburant sont exprimées en poids de carburant.

7. Procédé selon l'une quelconque des revendications 4 à 6, dans lequel l'étape de calcul (30) d'un volume différentiel de carburant tient compte de variations de la quantité de carburant devant à être distribuée à l'aéronef.

8. Procédé selon l'une quelconque des revendications précédentes, dans lequel l'étape de calcul comporte l'application d'un appoint pour compenser d'éventuelles imprécisions de comptage.
